# EUROPEAN PATENT APPLICATION

(11) **EP 1 118 926 A1**
(43) Date of publication of application: **25.07.2001**
(21) Application number: 01300252.2
(22) Date of filing: 12.01.2001
(51) Int. Cl.: G06F 1/16

(54) **Customizing panel for portable computer**

(30) Priority: 21.01.2000 US 489454
(71) Applicant: Hewlett-Packard Company, A Delaware Corporation, Palo Alto, CA 94304 (US)
(72) Inventor: Oross, Glen A., Corvallis,OR 97330 (US); Derocher, Michael D., Corvallis,OR 97330 (US); Peskin, Christopher A., Corvallis,OR 97330 (US); Helot, Jacques H, 3021 VC Rotterdam (NL)
(74) Representative: Jackson, Richard Eric

(57) **Abstract**

A portable computer (10/12/14/16/18/130) has a display housing (22/116) attached to a base housing (24/120). The display has at least one panel (20/40/50/60/94/110/112/114) used for personalization of the portable computer. The at least one panel can be removed and inserted into the display housing thereby changing the appearance of the portable computer.

## Description

### FIELD OF THE INVENTION

The invention relates to the mechanical package of a portable computer. More specifically, it relates to interchangeable panels that allow for user customization of the portable computer.

### BACKGROUND OF THE INVENTION

Portable computers are increasingly becoming the computers of choice for active individuals. In the past, manufacturers have typically marketed portable computers to mobile professionals. However, with the advent of the Internet and wireless connections, the mass consumer market is now accepting portable computers as a way to be continually bonded to their favorite web pages when and wherever. Unfortunately, the staid, stoic, and boxy appearance of professionally oriented portable computers just does not excite the mass consumer. Mass consumers are familiar with "designer" desktop computers that are stylish and fashionable. However, if manufacturers place "designer" portable computers on the market, there is a very big risk that a particular aesthetic look may not be accepted. Even if the marketplace accepts a "designer" portable computer, the particular look and feel of that product may quickly become stale and out of fashion. Further, the "individualism" of people in the consumer market drives a desire to personalize possessions. Thus, a plain vanilla portable computer is not acceptable to the consumer market. Yet, the costs involved in researching and test marketing various "designer" models are too expensive and not feasible given the low cost margins typical within the computer market. Therefore, there is a need to have a low risk and low cost method for marketing "designer" portable computers.

### SUMMARY

A portable computer has a display housing attached to a base housing. The display has at least one panel used for personalization of the portable computer. The at least one panel can be removed and another panel inserted into the display housing thereby changing the appearance of the portable computer.

### BRIEF DESCRIPTION OF THE DRAWINGS

Fig. 1A is an isometric view of an embodiment of the invention.

Fig. 1B is a side view of the embodiment of Fig. 1A.

Fig. 1C is an isometric view of the embodiment of Fig. 1A illustrating the insertion of a customizable panel.

Fig. 2A is an isometric view of a first alternative embodiment of the invention.

Fig. 2B is a partial isometric view of the embodiment of Fig. 2A illustrating the insertion of a customizable panel.

Fig. 3 is an isometric drawing of a second alternative embodiment of the invention.

Fig. 4 is a partial isometric drawing of a third alternative embodiment of the invention in which illustrates the insertion of a customizable grip panel.

Fig. 5A is an isometric view of a first alternative embodiment of the grip panel using a gel surface.

Fig. 5B is an isometric view of a second alternative embodiment of the grip panel using an embossed surface.

Fig. 5C is an isometric view of a third alternative embodiment of the grip panel using a rubber surface.

Fig. 5D is an isometric view of a fourth alternative embodiment of the grip panel using a leather surface.

Fig. 5E is an isometric view of a fifth alternative embodiment of the grip panel that includes a removable panel.

Fig. 5F is an isometric view of the fifth alternative embodiment wherein the removable panel is rotated 180 degrees.

Fig. 6A is a partial cross sectional view of a fourth alternative embodiment of invention illustrating the insertion of a customizable panel.

Fig. 6B is a partial cross sectional view of the embodiment in Fig. 6A with the customizable panel inserted into the portable computer.

Fig. 7A is an illustration of a portable computer having multiple customizable panels including bumper panels in the corners.

Fig. 7B is an illustration of the portable computer of Fig. 7A showing how the customizable panels are installed.

### DETAILED DESCRIPTION OF THE PREFERRED AND ALTERNATE EMBODIMENTS

One aspect of the invention is to allow users to change the look of the portable computer by the use of clip-on "designer" panels. These designer panels allow the user to customize their portable computer with various colors and graphics. The designer panels can also be made up of various materials to impart a specific look or theme. Some of the possible materials include gel filled sacks, rubber, leather, and specially molded plastic embossments. Further, the customizable panels may contain additional features such as logos, asset tag areas, business card holders and coin trays, to name a few. The designer panels allow a portable computer user to purchase inexpensive accessories and easily change the appearance of his/her portable computer. By providing for customizable panels, a manufacturer is able to offer aesthetically risky products without limiting the customer base of the product. This is important because some customers, like corporations, prefer a forced particular look and feel while others which to have unique appearance for their computers.

The customizable panels are further capable of being designed to help protect the portable computer's case from dents and scratches. Preferably, the customizable panels are placed on the top of the display housing although they can be positioned anywhere on the portable computer. Placing customizable panels on the corners of the portable computer not only provides aesthetic appeal but also increases ruggedness. A portable computer may be designed to allow for one or more customizable panels. Preferably, the customizable panels are attached to the portable computer with appropriate tabs, snaps, or clips. Alternatively, the customizable panels can be attached with re-useable fasteners such as elastics, hooks, screws, reusable adhesive, and magnets.

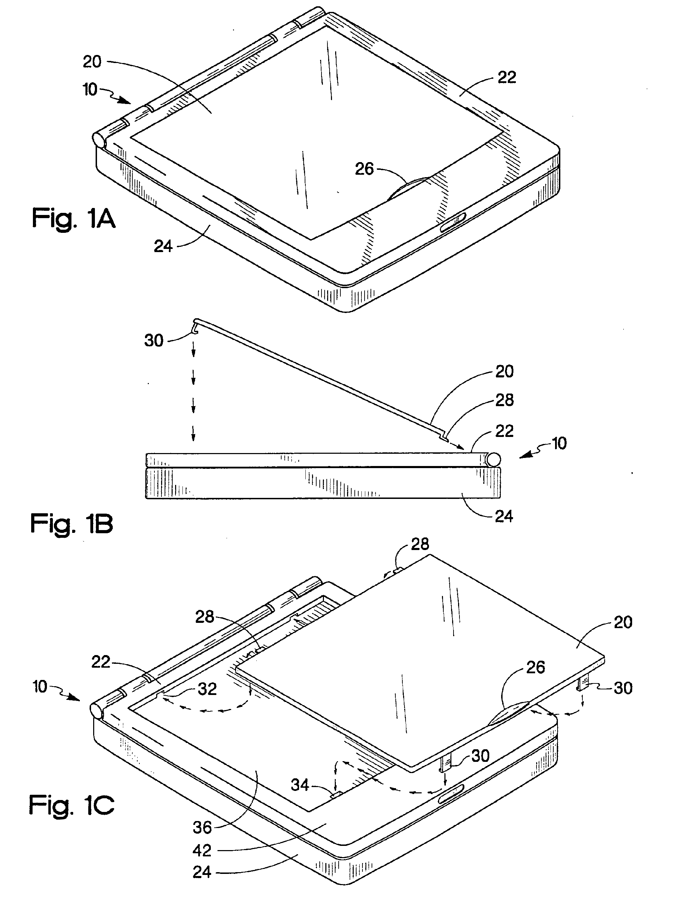

Fig. 1A is an illustration of an embodiment of a portable computer 10 showing a changeable cosmetic panel 20 that snaps in and out of the display housing 22 and substantially covers the entire surface of the display housing lid 42. The display housing 22 is attached to base housing 24 of the portable computer 10. Preferably, the display housing 22 is attached to the base housing 24 using a hinge structure. To facilitate removal of the cosmetic panel 20 from portable computer 10, the cosmetic panel 20 optionally has an indention 26 for allowing a user to grip the cosmetic panel 20 during a removal process.

Fig. 1B is a side view of the portable computer 10 of Fig. 1A that illustrates one method for inserting the cosmetic panel 20 into the display housing 22. The cosmetic panel 20 has tabs 28 that insert into tab openings 32 (Fig. 1C). Cosmetic panel 20 also contains snaps 30 that are engaged in snap openings 34 of the display housing 22. The display housing 22 preferably, but optionally has a recessed cover opening 36 to allow the cosmetic panel 20 to mount flush or otherwise appear integrated into the display housing 22. The cosmetic panel 20 made be a solid color or a mixture of colors in either an opaque or a translucent material. Optionally, the cosmetic panel 20 can also be made of a metallic material such as brushed or anodized aluminum or other plated or coated metals. The cosmetic panel 20 is also envisioned as possibly being formed to allow for the printing of graphic material such as photographs or company logos. Further, it is envisioned that the panel can also include such functional items as business card holders and coin slots.

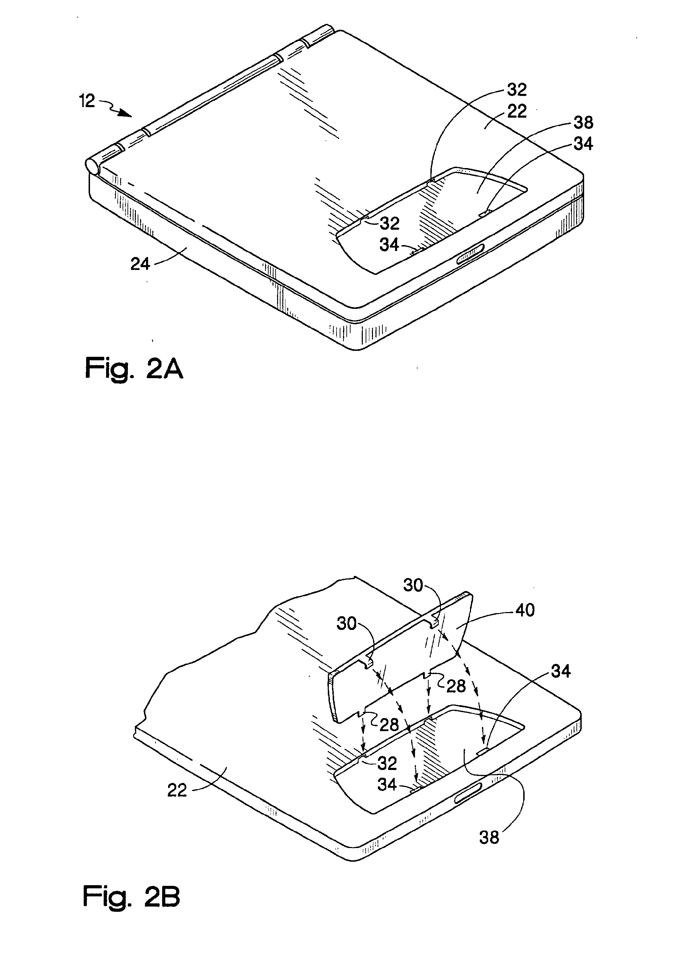

Fig. 2A is an illustration of a first alternative embodiment of a portable computer 12 in which the customizable cosmetic panel covers only a partial surface of the display housing 22. In this approach, multiple alternative cosmetic panels 40 can be placed on the portable computer 12. Portable computer 12 has a display housing 22 attached to base housing 24. The display housing 22 contains an alternative recessed panel opening 38 that includes tab opening 32 and snap openings 34.

Fig. 2B is a partial illustration of the display housing 22 of portable computer 12 diagramming how the alternative cosmetic cover 40 is inserted into the display housing. The alternative cosmetic cover 40 has tabs 28 that engage tab-opening 32 and snaps 30 that engage snap openings 34.

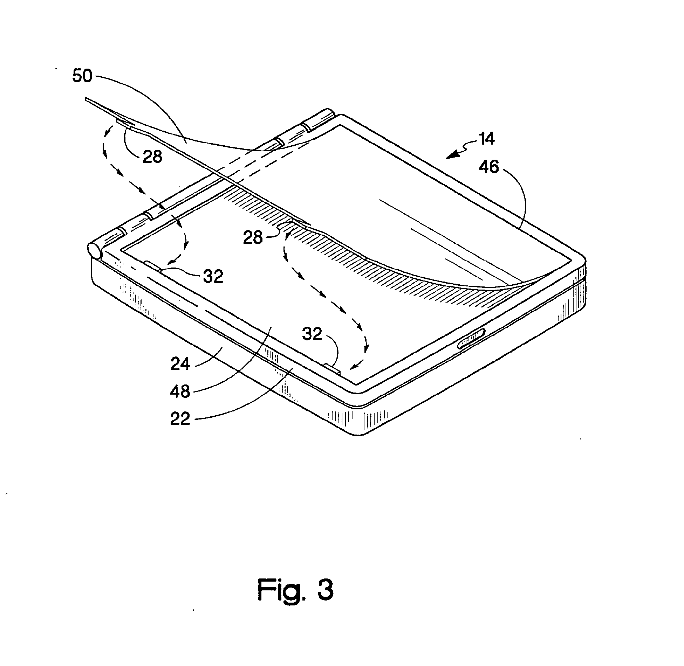

Fig. 3 is a isometric drawing of a third alternative embodiment of a portable computer 14 that has a flexible panel 50 which is preferably transparent. Flexible panel 50 has tabs 28 that can be inserted into tab openings 32. The distal edge 46 of flexible panel 50 may be permanently attached or also removable with tabs 28. The flexible panel 50 is removed to allow the user to access the recessed flexible panel opening 48 in display housing 22. When the flexible panel 50 is removed, the user may place a piece of paper or other graphic in the flexible cover opening 48. If the flexible panel 50 is transparent, the content of the paper, such as a photograph, is visible to the user. If the flexible panel 50 is opaque, the recessed flexible panel opening 48 can be used to securely store documents or other material.

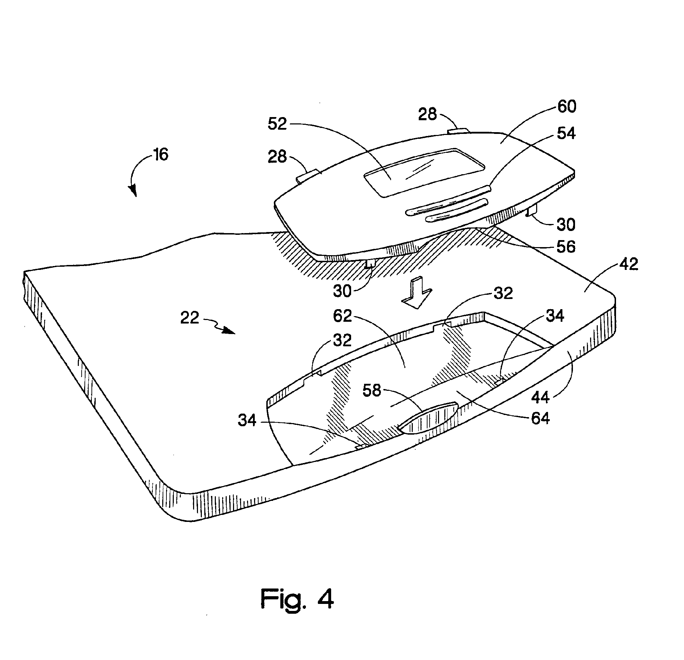

Fig. 4 is a partial illustration of the display housing 22 of a portable computer 16 in which supports a grip panel 60. The grip panel 60 provides a grip 54 that allows a user to securely hold the portable computer 22 during transit. Optionally included on the grip panel 60 is a custom logo area 52 to allow a user to place identification such as a name, initials, company logo, or asset tag. Preferably, the grip panel 60 covers a portion of the display housing lid surface 42 and the display housing edge surface 44 which contains the latch 58 for the display housing 22. A recessed edge surface 64 allows the grip panel 60 to have sufficient thickness to support multiple types of grips. The grip panel 60 in this example uses tabs 28 to insert into tab openings 32 and snaps 30 that insert into snap openings 34. If required, the grip panel 60 also contains a latch recess 56 to prevent the grip panel 60 from interfering with the latch 58. Grip panel 60 is optionally transparent or translucent to allow for the insertion of readable material on recessed top surface 62.

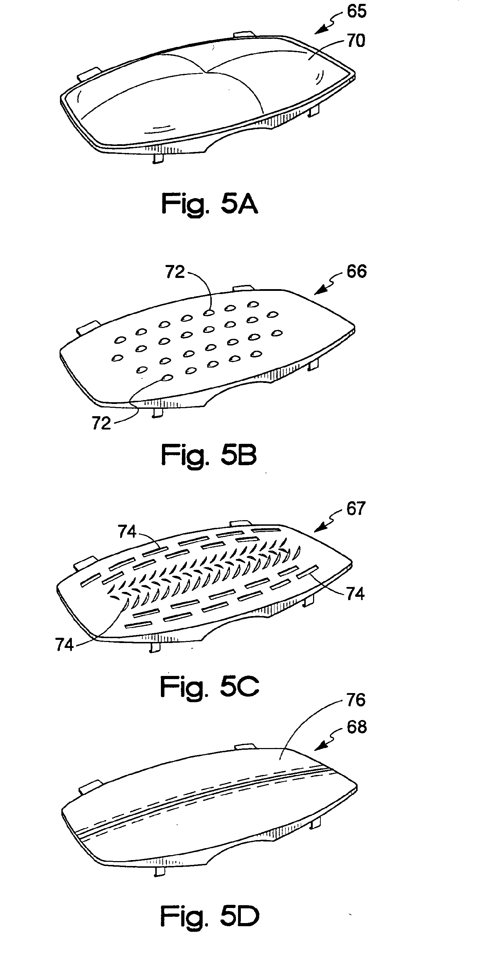

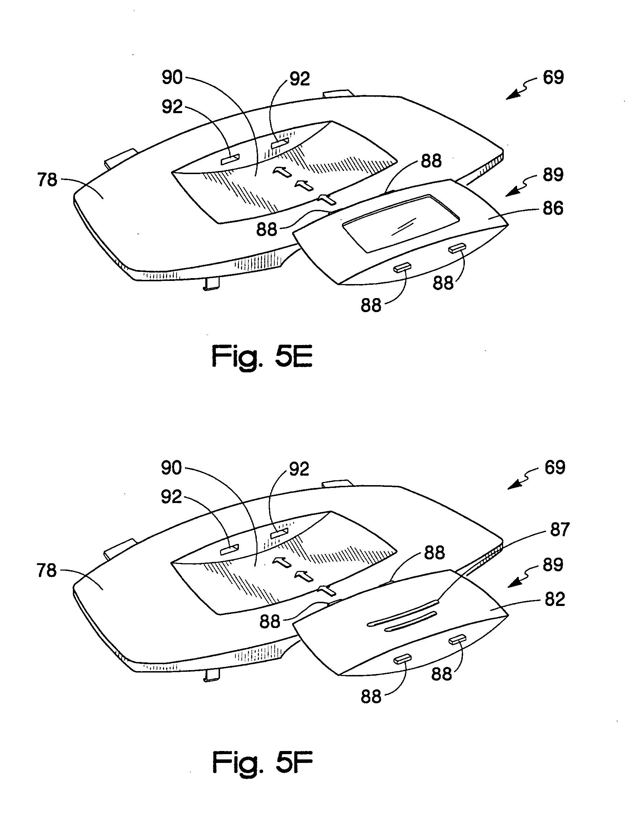

Fig. 5A through Fig. 5F illustrate many different alternative embodiments of customizable grips that may be available to allow the user to customize one's portable computer. Fig. 5A is an illustration of a gel grip 65 which is formed of a liquid gel encapsulated by flexible plastic to form a gel filled surface 70. The benefit of this grip is that it readily conforms to the user's hand thus providing an effective grip and novel appearance. Fig. 5B is an illustration of an embossed grip 66 in which a bump pattern 72 is formed in the plastic mold. The bump pattern 72 may be either concave or convex indentations or a mixture of both. Fig. 5C is an illustration of a sport grip 67 which is made up of a rubber material and given a trendy tire pattern 74 or other repeating design. Fig. 5D is an illustration of a leather grip 68 that provides a custom leather surface 76. Fig 5E is an illustration of a customizable grip 69 that has a removable panel 82. Removal panel 89 has a first surface 86 and a second surface 82 as shown in Fig. 5F that can be interchanged by the user depending on the user's situation. For instance, a user may wish to hide his business card and use the grip surface during travel, such as at an airport, yet have the business card showing when visiting a customer. First surface 86 contains preferably a functional surface such as business card holder 80. Optionally, the functional surface may store such information as a company ID, an asset tag, or other identification material. The second surface 82 provides a grip surface 87. The removable panel 89 is held in the panel recess 90 of customizable grip 69 using protrusions 88 and indentations 92. The textured surface 78 of the customizable grip 69 can be formed from any of the previously described materials.

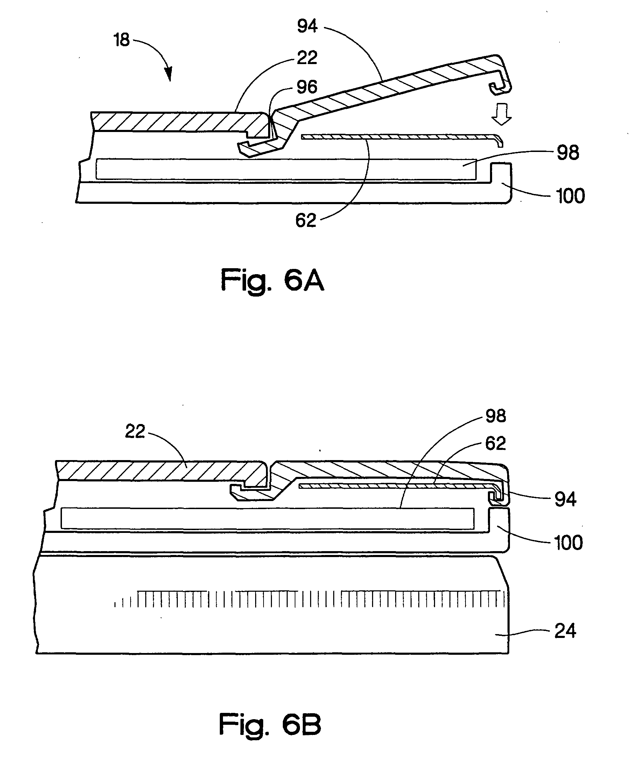

Fig. 6A is an illustration of a fourth alternative embodiment of a portable computer that illustrates a rotatably snapping alternative grip 94. The display housing 22 has an opening 96 in which the alternative grip is inserted. The alternative grip 94 is then rotated in the direction shown to cause the alternative grip to latch to a recessed lid surface 62 of the display housing 22. Beneath the display opening is a liquid crystal display 98 and it is held in place with LCD cover 100. Fig. 6B is an illustration of the embodiment of Fig. 6A when the alternative grip 94 is fully snapped into the display housing 22 which resides on base housing 24.

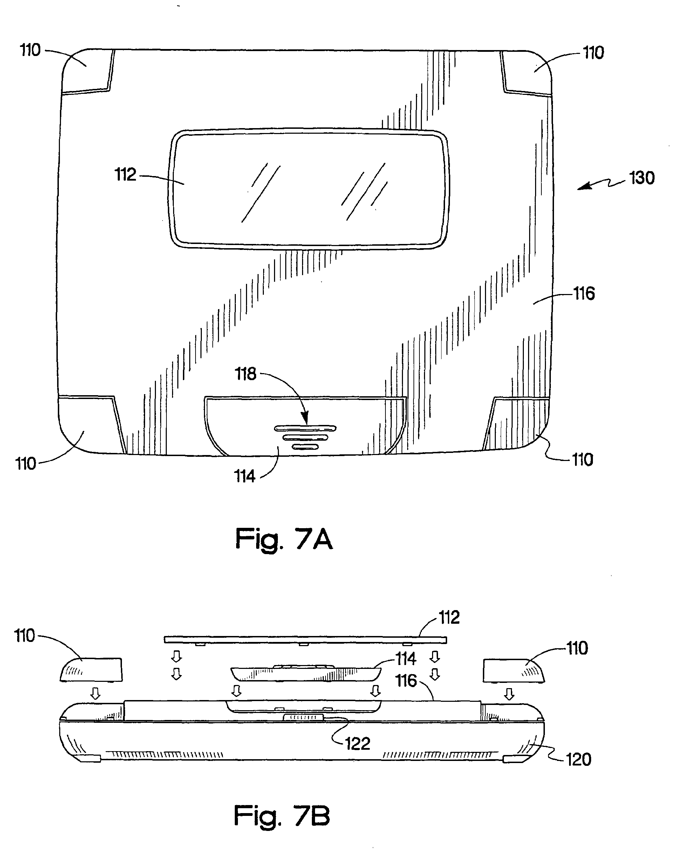

Fig. 7A is an illustration of fifth alternative embodiment having multiple customizable panels on a portable computer 130. The display housing 116 has a grip panel 114 having a grip 118 and a customizable cover panel 112. Preferably, but optionally, the portable computer 130 also allows for bumper panels 110 that provides aesthetic appeal in making the product look rugged. The bumper panels 110 are functional as well in protecting the portable computer 130 from mishandling and minor abuse. If the bumper panels 110 become damaged, they are easily replaced allowing the portable computer 130 to appear new again. Preferably, the bumper panels are slightly raised above the surface of display housing 116 to prevent display housing 116 from becoming scratched. Preferably the bumper panels 110 are fabricated using shock absorbing material such as rubber but other materials such as leather, plastic, foam, or gel-filled surfaces, to name a few, can be used and still meet the scope and spirit of the invention.

Fig. 7B is an illustration of the portable computer 130 in Fig. 7A from another view to diagram the insertion of the customizable panels. The display housing 116 rests upon the base housing 120. Preferably, the display housing 116 is secured to base housing 120 with a latch 122.

By providing for clip-on "designer" panels, the risk involved in introducing a new portable computer to market is reduced. Because the "designer" panels can be made inexpensively, the user can personalize his/her portable computer, thus allowing for individual tastes that can change over time. While several embodiments have been described and illustrated, the invention is only limited by the claims.

## Claims

1. A portable computer (10/12/14/16/18/130) having a base housing (24/120), the portable computer comprising:
a display housing (22/116) attached to said base housing, the display housing having at least one panel (20/40/50/60/94/110/112/114) capable of removal from and insertion into said display housing wherein the appearance of the portable computer is capable of personalization.

2. The portable computer (10/12/14/16/18/130) of claim 1 wherein the display housing (22/116) has a panel opening (36/48) substantially the area of the lid surface of the display housing.

3. The portable computer (10/12/14/16/18/130) of claim 1 wherein the display housing (22/116) has a panel opening (36/48) encompassing a grip surface area (54/118) and wherein at least one of said at least one panel (20/40/50/60/94/110/112/114) provides a grip surface.

4. The portable computer (10/12/14/16/18/130) of claim 3 wherein said grip surface comprises a gel filled surface (70).

5. The portable computer (10/12/14/16/18/130) of claim 3 wherein said grip surface comprises an insert (89) having first surface (86) and a second surface (82) opposite said first surface and wherein said insert is capable of displaying said first surface or said second surface on said grip surface.

6. The portable computer (10/12/14/16/18/130) of claim 1 wherein said at least one panel (20/40/50/60/94/110/1 12/114) is located on a corner of said portable computer to further provide bumper protection.

7. The portable computer (10/12/14/16/18/130) of claim 6 wherein said at least one panel (20/40/50/60/94/110/112/114) comprises a shock absorbing surface.

8. A method for updating the appearance of a portable computer (10/12/14/16/18/130), comprising the steps of:
fabricating the portable computer with a display housing (22/116) having at least one removable panel (20/40/50/60/94/110/112/114);
removing at least one of the at least one removable panel;
replacing the removed at least one removable panel with at least one accessory panel wherein the portable computer is customized.

9. The method of claim 8 wherein the step of removing at least one of the at least one removable panel further comprises the step of removing a first grip panel (54) and wherein the at least one accessory panel includes a second grip panel comprised of a different material (70/72/74/76) than said first grip panel.

10. A method for protecting the appearance of a portable computer (130), comprising the steps of:
fabricating a portable computer with a display housing (116) having at least one removable panel (110) disposed in a corner of the portable computer;
removing at least one of the at least one removable panel; and
replacing the at least one removed panel with a new removable panel.
